# EUROPEAN PATENT APPLICATION

(11) **EP 4 550 856 A1**
(43) Date of publication of application: **07.05.2025**
(21) Application number: 23854401.9
(22) Date of filing: 14.08.2023
(51) Int. Cl.: H04W 4/06

(54) **COMMUNICATION METHOD AND RELATED APPARATUS**

(30) Priority: 19.08.2022 CN 202210999884
(71) Applicant: Huawei Technologies Co., Ltd., Shenzhen, Guangdong 518129 (CN)
(72) Inventor: PENG, Jianxin, Shenzhen, Guangdong 518129 (CN); ZHANG, Bo, Shenzhen, Guangdong 518129 (CN)
(74) Representative: MERH-IP Matias Erny Reichl Hoffmann Patentanwälte PartG mbB
(86) International application number: PCT/CN2023/112905
(87) International publication number: WO 2024/037500

(57) **Abstract**

This application provides a communication method and a related apparatus. The method includes: A first device receives a Bluetooth low energy BLE broadcast from a second device, where the BLE broadcast includes a first field, the first field is used to carry a first device information version number of the second device, and the first device information version number indicates a version of current device information of the second device; and the first device determines that the first device stores device information of the second device, where the device information of the second device includes a second device information version number of the second device, and the second device information version number indicates a version of the device information of the second device that is stored in the first device; and if the first device information version number is the same as the second device information version number, restores the device information of the second device that is stored in the first device. According to the method provided in this application, a networked device can go online quickly.

## Description

This application claims priority to Chinese Patent Application No. 202210999884.0, filed with the China National Intellectual Property Administration on August 19, 2022 and entitled "COMMUNICATION METHOD AND RELATED APPARATUS", which is incorporated herein by reference in its entirety.

### TECHNICAL FIELD

This application relates to the field of Bluetooth technologies, and in particular, to a communication method and a related apparatus.

### BACKGROUND

With an increasing quantity of personal terminal devices in various forms such as a mobile phone, a tablet computer, a watch, a band, and a personal computer (personal computer, PC), more scenarios of linkage and collaboration between devices emerge, and also bring more convenience. A prerequisite for interconnection between devices is that a device perceives a peripheral device and can communicate with the peripheral device. Usually, the devices may be connected in a wireless manner, including common manners such as wireless fidelity (wireless fidelity, Wi-Fi) and Bluetooth. In an outdoor scenario, due to a lack of a Wi-Fi environment, a service between devices mainly implements perception and communication between the devices through Bluetooth. Generally, when a specific device searches for a peripheral device, the device usually needs to send a networking broadcast, and then the peripheral device establishes a Bluetooth low energy (Bluetooth low energy, BLE) connection to the device based on the received networking broadcast. Further, the devices mutually perform identity authentication, agree on a communication key, and exchange device information by using the generated communication key, to implement networking between the devices. However, processes of a BLE connection, authentication, and device information exchange are time-consuming and occupy a large quantity of Bluetooth resources. In view of this, how a networked device goes online quickly becomes one of problems that need to be urgently resolved.

### SUMMARY

This application provides a communication method and a related apparatus, so that fast networking between devices can be implemented.

According to a first aspect, this application provides a communication method. The method includes:
A first device receives a Bluetooth low energy BLE broadcast from a second device, where the BLE broadcast includes a first field, the first field is used to carry a first device information version number of the second device, and the first device information version number indicates a version of current device information of the second device;
the first device determines that the first device stores device information of the second device, where the device information of the second device includes a second device information version number of the second device, and the second device information version number indicates a version of the device information of the second device that is stored in the first device; and
if the first device information version number is the same as the second device information version number, the first device restores the device information of the second device that is stored in the first device.

In this application, a new BLE broadcast format is designed, that is, the first device information version number of the second device is carried in the BLE broadcast. The first device information version number of the second device may be used to determine whether to restore the device information of the second device that is stored in the first device. Specifically, when the first device information version number is the same as the second device information version number included in the device information of the second device that is stored in the first device, the first device restores the device information of the second device that is stored in the first device. This helps speed up a networking process. Optionally, a device information version number in this application may also be understood as a device information identifier or a device information index, and the device information identifier or the device information index is used to mark device information. For example, a first device information identifier or a first device information index included in the BLE broadcast sent by the second device is used to mark the current device information of the second device, and a second device information identifier or a second device information index included in the device information of the second device that is stored in the first device is used to mark the device information of the second device that is stored in the first device.

In a possible implementation, the method further includes:
if the first device information version number is different from the second device information version number, the first device sends a BLE establishment request to the second device, to establish a BLE connection between the second device and the first device;
the first device receives the device information of the second device from the second device through the BLE connection; and
the first device stores the device information of the second device from the second device.

In this implementation, when the first device information version number is different from the second device information version number, networking between devices may also be implemented by establishing a BLE connection to exchange device information of the devices.

In a possible implementation, the BLE broadcast further includes a second field, and the second field is used to carry device update information of the second device.

The method further includes:
the first device updates the device information of the second device based on the restored device information of the second device and the device update information of the second device.

In this implementation, the BLE broadcast may further include the device update information of the second device. Therefore, the first device can update the device information of the second device based on the restored device information of the second device and in combination with the device update information of the second device. This can increase a networking speed compared with a process in which device information of the devices is exchanged by establishing the BLE connection.

In a possible implementation, the device update information of the second device includes an information update part and a check value corresponding to the information update part.

That the first device updates the device information of the second device based on the restored device information of the second device and the device update information of the second device includes:
the first device performs integrity check on the information update part based on the check value; and
if a check result of the integrity check is that the check succeeds, the first device updates the device information of the second device based on the information update part and the device information of the second device that is stored in the second device, and stores updated device information of the second device.

In this implementation, the information update part and the check value corresponding to the information update part are carried in the BLE broadcast, so that integrity check can be performed on the information update part based on the check value. This can avoid a packet loss in a broadcast process of the BLE broadcast, and help improve reliability of carrying the information update part in the BLE broadcast.

In a possible implementation, the BLE broadcast further includes a salt value for broadcast encryption, and the device update information of the second device is ciphertext information for encrypting, by using a broadcast key of the second device, the information update part and the check value corresponding to the information update part.

Before the first device performs integrity check on the information update part based on the check value, the method further includes:
the first device decrypts the ciphertext information based on the salt value for broadcast encryption and the broadcast key of the second device, to obtain the information update part and the check value corresponding to the information update part.

In this implementation, content carried in the BLE broadcast is encrypted, so that broadcast security can be enhanced to prevent an attack from an attacker.

In a possible implementation, the BLE broadcast further includes a list of communication key short values, and the device information of the second device that is stored in the first device includes a communication key between the second device and the first device.

The method further includes:
the first device determines a communication key short value corresponding to the communication key between the second device and the first device; and
if the list of communication key short values includes the communication key short value, the first device sends communication data to the second device by using the communication key between the second device and the first device that is stored in the first device.

In this implementation, the list of communication key short values may also be carried in the BLE broadcast, and the list of communication key short values includes short values corresponding to a plurality of communication keys. After receiving the BLE broadcast, the first device may calculate, according to a same operation method, the communication key between the second device and the first device that is stored in the first device, to obtain a short value, and traverse the BLE broadcast to determine whether the list of communication key short values includes the short value obtained through calculation. Specifically, when the short value obtained through calculation is included in the list of communication key short values, the first device may restore communication between the first device and the second device (that is, the first device may send the communication data to the second device by using the communication key between the second device and the first device that is stored in the first device), so that security is improved and communication efficiency is improved to some extent.

In a possible implementation, the device information of the second device that is stored in the first device includes a communication key between the second device and the first device.

The method further includes:
the first device sends communication data to the second device by using the communication key between the second device and the first device that is stored in the first device.

In this implementation, when it is determined that the first device information version number is the same as the second device information version number, the first device immediately restores communication between the first device and the second device (that is, the first device sends the communication data to the second device by using the communication key between the second device and the first device that is stored in the first device), so that communication efficiency can be improved.

In a possible implementation, the BLE broadcast further includes a short value of account information of the second device and/or a short value of a device identifier of the second device.

Before the first device determines that the first device stores device information of the second device, the method further includes:
the first device determines, based on the short value of the account information of the second device and/or the short value of the device identifier of the second device, whether a trust relationship exists between the second device and the first device; and
when the first device determines that the trust relationship exists between the second device and the first device, the first device determines that the first device stores the device information of the second device.

In this implementation, after determining that the trust relationship exists between the second device and the first device, the first device determines that the first device stores the device information of the second device, to prevent a device from being woke up and notified by a non-concerned BLE broadcast.

In a possible implementation, the method further includes:
the first device sends a BLE broadcast, where the BLE broadcast sent by the first device is used by the second device to restore and update device information of the first device that is stored in the second device.

In this implementation, the first device may also help, by sending the BLE broadcast, the second device restore and update the device information of the first device that is stored in the second device. This increases a speed at which the first device goes online in the second device.

According to a second aspect, this application provides a communication method. The method includes:
a second device sends a Bluetooth low energy BLE broadcast to a first device, where the BLE broadcast includes a first field, the first field is used to carry a first device information version number of the second device, and the first device information version number indicates a version of current device information of the second device.

In a possible implementation, the method further includes:
receiving a BLE establishment request from the first device, to establish a BLE connection between the second device and the first device; and
sending, by the second device, device information of the second device to the first device through the BLE connection.

In a possible implementation, the BLE broadcast further includes a second field, and the second field is used to carry device update information of the second device.

In a possible implementation, the device update information of the second device includes an information update part and a check value corresponding to the information update part.

In a possible implementation, the BLE broadcast further includes a salt value for broadcast encryption, and the device update information of the second device is ciphertext information for encrypting, by using a broadcast key of the second device, the information update part and the check value corresponding to the information update part.

In a possible implementation, the method further includes:
the second device receives communication data from the first device.

In a possible implementation, the method further includes:
the second device receives a BLE broadcast from the first device, and the second device restores and updates, by using the BLE broadcast sent by the first device, device information of the first device that is stored in the second device.

According to a third aspect, this application provides a communication apparatus. The communication apparatus is a first device, and the apparatus includes:
a Bluetooth module, configured to receive a Bluetooth low energy BLE broadcast from a second device, where the BLE broadcast includes a first field, the first field is used to carry a first device information version number of the second device, and the first device information version number indicates a version of current device information of the second device; and
a processing module, configured to determine that a storage module of the first device stores device information of the second device, where the device information of the second device includes a second device information version number of the second device, and the second device information version number indicates a version of the device information of the second device that is stored in the storage module.

If the first device information version number is the same as the second device information version number, the processing module restores the device information of the second device that is stored in the storage module.

In a possible implementation, the processing module is further configured to: if the first device information version number is different from the second device information version number, send a BLE establishment request to the second device by using the Bluetooth module, to establish a BLE connection between the second device and the first device.

The Bluetooth module is further configured to receive the device information of the second device from the second device through the BLE connection.

The storage module is configured to store the device information of the second device from the second device.

In a possible implementation, the BLE broadcast further includes a second field, and the second field is used to carry device update information of the second device.

The processing module is further configured to:
update the device information of the second device based on the restored device information of the second device and the device update information of the second device.

In a possible implementation, the device update information of the second device includes an information update part and a check value corresponding to the information update part.

When updating the device information of the second device based on the restored device information of the second device and the device update information of the second device, the processing module is configured to:
perform integrity check on the information update part based on the check value; and
if a check result of the integrity check is that the check succeeds, update the device information of the second device based on the information update part and the device information of the second device that is stored in the second device, and store updated device information of the second device.

In a possible implementation, the BLE broadcast further includes a salt value for broadcast encryption, and the device update information of the second device is ciphertext information for encrypting, by using a broadcast key of the second device, the information update part and the check value corresponding to the information update part.

Before performing integrity check on the information update part based on the check value, the processing module is configured to:
decrypt the ciphertext information based on the salt value for broadcast encryption and the broadcast key of the second device, to obtain the information update part and the check value corresponding to the information update part.

In a possible implementation, the BLE broadcast further includes a list of communication key short values, and the device information of the second device that is stored in the storage module includes a communication key between the second device and the first device.

The processing module is further configured to:
determine, by the first device, a communication key short value corresponding to the communication key between the second device and the first device; and
if the list of communication key short values includes the communication key short value, send communication data to the second device by using the Bluetooth module and by using the communication key between the second device and the first device that is stored in the storage module.

In a possible implementation, the device information of the second device that is stored in the storage module includes a communication key between the second device and the first device.

The Bluetooth module is further configured to:
send communication data to the second device by using the communication key between the second device and the first device that is stored in the storage module.

In a possible implementation, the BLE broadcast further includes a short value of account information of the second device and/or a short value of a device identifier of the second device.

Before determining that the first device stores device information of the second device, the processing module is further configured to:
determine, based on the short value of the account information of the second device and/or the short value of the device identifier of the second device, whether a trust relationship exists between the second device and the first device; and
when the first device determines that the trust relationship exists between the second device and the first device, determine that the first device stores the device information of the second device.

In a possible implementation, the Bluetooth module is further configured to:
send a BLE broadcast, where the BLE broadcast is used by the second device to restore and update device information of the first device that is stored in the second device.

According to a fourth aspect, this application provides a communication apparatus. The apparatus includes:
a Bluetooth module, configured to send a Bluetooth low energy BLE broadcast to a first device, where the BLE broadcast includes a first field, the first field is used to carry a first device information version number of a second device, and the first device information version number indicates a version of current device information of the second device.

In a possible implementation, the Bluetooth module is further configured to:
receive a BLE establishment request from the first device, to establish a BLE connection between the second device and the first device; and
send device information of the second device to the first device through the BLE connection.

In a possible implementation, the BLE broadcast further includes a second field, and the second field is used to carry device update information of the second device.

In a possible implementation, the device update information of the second device includes an information update part and a check value corresponding to the information update part.

In a possible implementation, the BLE broadcast further includes a salt value for broadcast encryption, and the device update information of the second device is ciphertext information for encrypting, by using a broadcast key of the second device, the information update part and the check value corresponding to the information update part.

In a possible implementation, the Bluetooth module is further configured to:
receive communication data from the first device.

In a possible implementation, the Bluetooth module is further configured to:
receive a BLE broadcast from the first device.

The apparatus further includes a processing module.

The processing module is configured to: restore and update, based on the BLE broadcast, device information of the first device that is stored in a storage module of the second device.

According to a fifth aspect, this application provides an electronic device, including one or more processors, one or more Bluetooth modules, and one or more memories. The one or more memories and the one or more Bluetooth modules are coupled to the one or more processors. The one or more memories are configured to store computer program code, the computer program code includes computer instructions, and when the one or more processors execute the computer instructions, the electronic device is enabled to perform the communication method according to any possible implementation of any one of the foregoing aspects.

According to a sixth aspect, an embodiment of this application provides a computer storage medium, including computer instructions. When the computer instructions are run on an electronic device, the electronic device is enabled to perform the communication method according to any possible implementation of any one of the foregoing aspects.

According to a seventh aspect, an embodiment of this application provides a computer program product. When the computer program product runs on a computer, the computer is enabled to perform the communication method according to any possible implementation of any one of the foregoing aspects.

### BRIEF DESCRIPTION OF DRAWINGS

FIG. 1 is a diagram of a wireless communication system according to this application;
FIG. 2 is a diagram of an architecture of distributed communication according to this application;
FIG. 3 is a schematic flowchart of networking between devices;
FIG. 4 is a diagram of a structure of an electronic device according to this application;
FIG. 5 is a diagram of another structure of an electronic device according to an embodiment of this application;
FIG. 6 is a schematic flowchart of a BLE-based communication method according to an embodiment of this application;
FIG. 7 is a diagram of restoring communication between devices according to an embodiment of this application;
FIG. 8 is another schematic flowchart of a BLE-based communication method according to an embodiment of this application;
FIG. 9 is a diagram of a structure of a communication apparatus according to an embodiment of this application; and
FIG. 10 is a diagram of another structure of a communication apparatus according to an embodiment of this application.

### DESCRIPTION OF EMBODIMENTS

The following describes the technical solutions in embodiments of this application with reference to the accompanying drawings in embodiments of this application.

In descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

Embodiments of this application provide a Bluetooth low energy-based communication method and a related apparatus. In a non-initial networking scenario, electronic devices do not need to perform procedures such as BLE connection establishment, authentication, and information exchange, but exchanges device information by using a BLE broadcast. This application is implemented, so that a networked device can go online quickly.

A wireless communication system provided in embodiments of this application is first described.

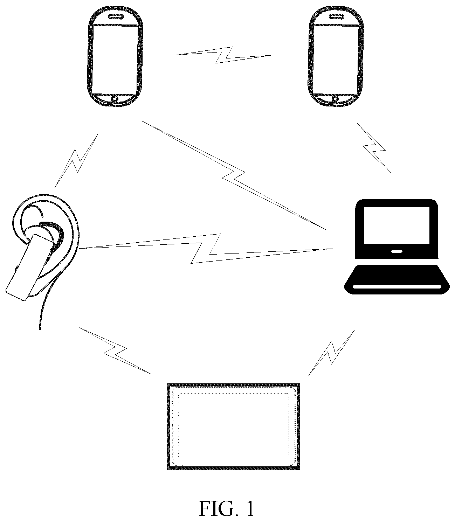

FIG. 1 is a diagram of a wireless communication system according to this application. As shown in FIG. 1, the wireless communication system may include a plurality of electronic devices. Electronic devices may communicate with each other in the wireless communication system based on BLE. A type of the electronic device is not specifically limited in embodiments of this application. The electronic device may be a portable electronic device like a mobile phone, a tablet computer, a personal digital assistant (personal digital assistant, PDA), a wearable device (for example, a Bluetooth headset), or a laptop (laptop) computer, or may be a non-portable electronic device like a desktop computer. An example of the electronic device includes but is not limited to an electronic device carrying an iOS system, an Android system, a Microsoft system, or another operating system.

The electronic device in embodiments of this application may also be referred to as a terminal device. The terminal device may be a device having a wireless transceiver function, and may be specifically user equipment (user equipment, UE), an access terminal, a subscriber unit (subscriber unit), a subscriber station, a mobile station (mobile station), customer premises equipment (customer premises equipment, CPE), a remote station, a remote terminal, a mobile device, a user terminal, a wireless communication device, a user agent, or a user apparatus. Alternatively, the terminal device may be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to the wireless modem, a vehicle-mounted device, a communication device carried on a high-altitude aircraft, a wearable device, an uncrewed aerial vehicle, a robot, a point of sale (point of sale, POS) machine, a terminal in device-to-device (device-to-device, D2D) communication, a terminal in vehicle to everything (vehicle to everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

In this embodiment of this application, an apparatus configured to implement a function of the terminal device may be a terminal device, or may be an apparatus that can support the terminal device in implementing the function, for example, a chip system. The apparatus may be mounted in a terminal device or used in a manner of matching a terminal device. In this embodiment of this application, the chip system may include a chip, or may include a chip and another discrete component.

The following describes a system architecture applicable to embodiments of this application.

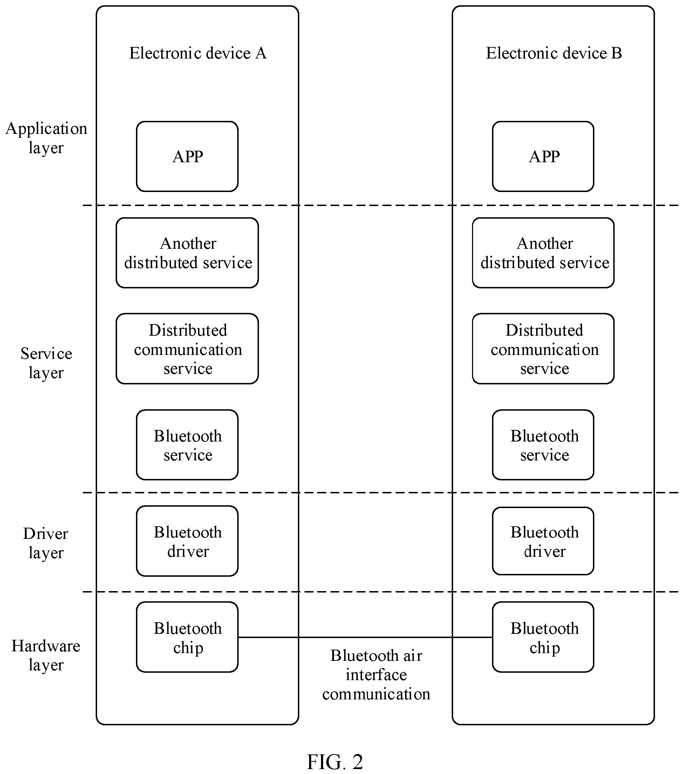

FIG. 2 is a diagram of an architecture of distributed communication according to this application. As shown in FIG. 2, any two electronic devices in a wireless communication system, for example, an electronic device A and an electronic device B, are used as an example. Based on a Bluetooth chip, a Bluetooth driver, and a Bluetooth service, a distributed communication service provides a communication capability for another distributed service and another App.

The Bluetooth chip implements interaction between a Bluetooth protocol and an air interface protocol.

The Bluetooth driver implements a function of the Bluetooth driver based on a device architecture to complete an interaction process for the Bluetooth chip.

The Bluetooth service provides a basic Bluetooth communication capability.

The distributed communication service provides communication capabilities such as discovery, connection, and transmission for another upper-layer distributed service and an App based on the Bluetooth service.

It may be understood that electronic devices in the wireless communication system usually need to perform networking before communication. Specifically, when a specific electronic device searches for a surrounding electronic device, the electronic device usually needs to send a networking broadcast, and then the surrounding electronic device may establish a BLE connection to the electronic device based on the received networking broadcast. Further, the electronic devices mutually perform identity authentication, agree on a communication key, and exchange electronic device information on the generated communication key, to implement networking between the electronic devices.

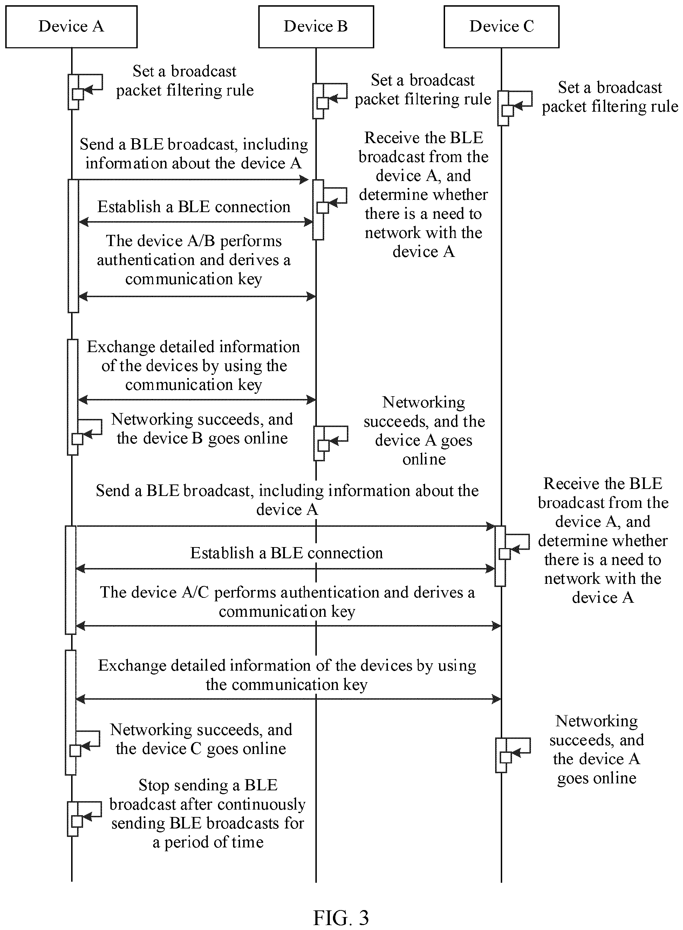

FIG. 3 is a schematic flowchart of networking between devices. It is assumed that a wireless communication system includes an electronic device A (device A for short), an electronic device B (device B for short), and an electronic device C (device C for short). As shown in FIG. 3, after being started, each electronic device sets a broadcast packet filtering rule of the electronic device. The electronic device is indicated to perform processing only when a received BLE broadcast meets the broadcast packet filtering rule. In other words, a broadcast packet filtering rule is set for a specific device, to prevent the device from being woke up and notified by a non-concerned BLE broadcast.

Specifically, when a specific electronic device (for example, the specific electronic device is the device A) needs to search for a peripheral device, the electronic device sends a networking broadcast. Usually, the networking broadcast may be broadcast to a peripheral device by using a BLE broadcast mechanism. In this application, the networking broadcast may also be described as a BLE broadcast.

The BLE broadcast includes information about the device (the device A), for example, account information, a device identity (Identity, ID), a device type, and a networking broadcast type of the device. Account information included in the BLE broadcast sent by the device A is usually a short value of the account information of the device A, and a device ID included in the BLE broadcast is usually a short value of the device ID of the device A. The networking broadcast type includes whether to wake up a screen-off device, a heartbeat type, a message type, and the like. This is not limited herein.

Correspondingly, after receiving the BLE broadcast, if the peripheral device (for example, the device B and the device C) determines that the BLE broadcast meets a broadcast packet filtering rule of the peripheral device, the peripheral device determines, based on the information of the device A in the BLE broadcast and stored information of the device, whether to perform networking with the device A. For ease of description, the following mainly uses interaction between the device A and the device B as an example for illustrative description.

Generally, the device B may check, based on the received information about the device A and information about the device B, whether the device A is already networked and goes online in the device B. If the device A is already networked and goes online in the device B, it indicates that the device A completes networking with the device B. If the device A is not networked and does not go online in the device B, the device B checks whether the device B and the device A meet a networking condition. If the device B determines that the device B and the device A that sends the broadcast meet the networking condition, for example, when the short value of the account information of the device A is the same as a short value of account information of the device B, or when there is another trust relationship between the device A and the device B, the device B initiates a BLE connection request to the device A to request to establish a BLE connection.

After the BLE connection is successfully established between the device B and the device A, the device A and the device B mutually perform authentication based on the BLE connection, and derive a communication key for encrypting data in a subsequent transmission process, in other words, the device A and the device B may subsequently communicate with each other by using the communication key, that is, exchange detailed information of the device A and the device B on an encrypted channel, for example, exchange one or more of the following: complete device IDs of the devices, complete account information, version numbers of the devices, Bluetooth version numbers of the devices, device names, internet protocol (internet protocol, IP) address information of the devices, media access control (media access control, MAC) address information of the devices, distributed communication capability information of the devices, transport protocols supported by the devices, software version information supported by the devices, and sizes of transmission buffers. This is not limited herein. After the information exchange is completed, networking between devices succeeds. The device A goes online in the device B, and the device B goes online in the device A.

It may be understood that, when there are a plurality of devices (for example, including the device C) around the device A, the plurality of devices need to interact with the device A that sends the broadcast. For an interaction process between the devices, refer to the foregoing interaction process between the device A and the device B. Details are not described herein again.

It should be noted that, after continuously sending BLE broadcasts for a period of time, the device A stops sending a BLE broadcast. It may be understood that, if the device A continuously sends the BLE broadcasts, a power resource of the device A is continuously consumed.

It should be noted that, in a scenario in which devices (for example, the device A and the device B, or the device A and the device C) are far away from each other and then close to each other, or in a scenario in which devices are powered off and then powered on again, the devices need to perform the foregoing processes again, including processes such as BLE broadcasting, BLE connection establishment, authentication, and device information exchange, so that the devices can be networked and go online again.

It should be noted that, because the processes of BLE connection establishment, authentication, and device information exchange take a long time and occupy a large quantity of Bluetooth resources, generally, 2s to 5s, this reduces networking and online efficiency of the devices.

In view of this, this application provides a Bluetooth low energy-based communication method and a related apparatus, to improve networking and online efficiency of devices.

The following describes a structure of an electronic device in embodiments of this application.

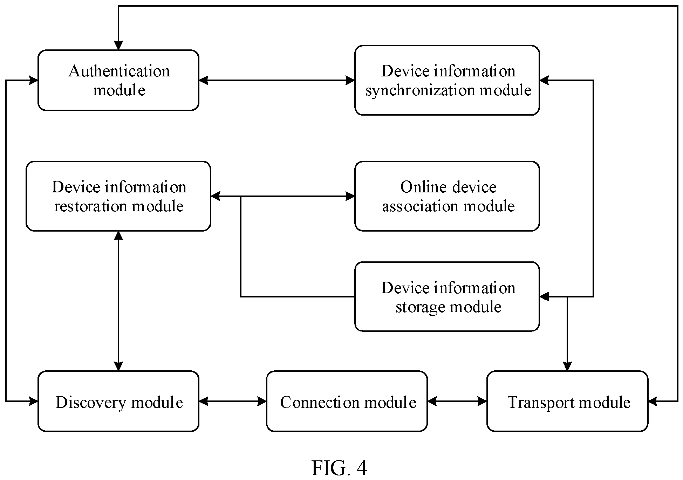

FIG. 4 is a diagram of a structure of an electronic device according to this application. As shown in FIG. 4, the electronic device may include the following modules:
a discovery module: is responsible for sending and receiving a broadcast;
a connection module: is responsible for connecting to a specified device and receiving the connection;
a transport module: provides a capability of sending and receiving data based on a connection channel;
a device information storage module: stores device information locally, including information about a peer device and a local device, where the information includes basic information about the devices and key information for communication;
online device management: manages trusted peripheral devices, where the devices need to be trusted and can communicate with each other;
a device information restoration module: restores a communication key based on broadcast information and stored device information to implement a quick online process;
device information synchronization: completes information exchange and difference updates on a secure channel; and
an authentication module: is responsible for authentication between devices, agreeing on or deriving a communication key, and managing communication keys between the devices.

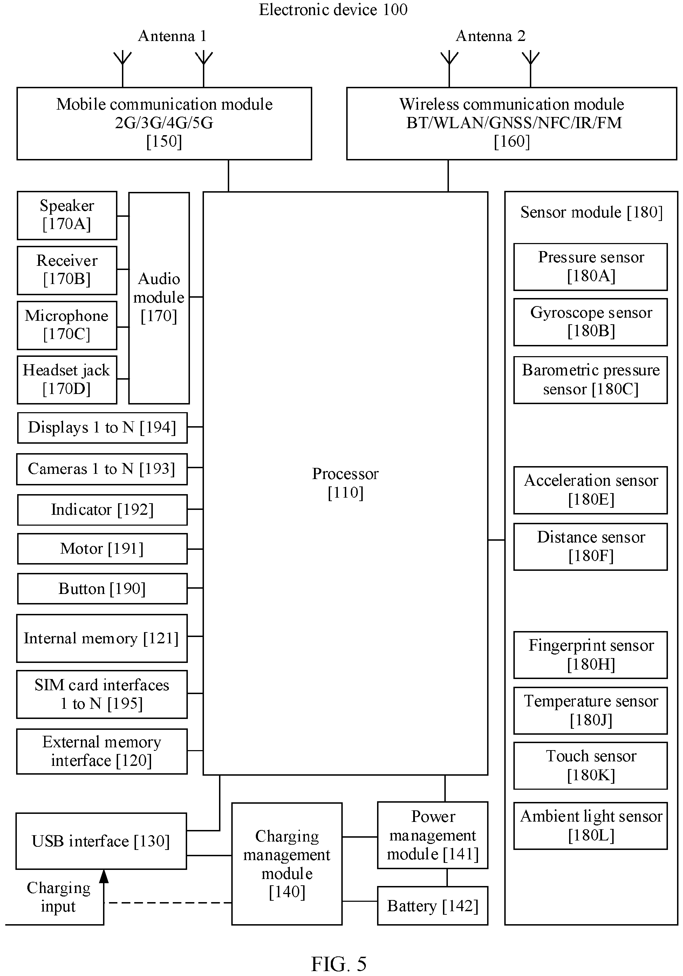

FIG. 5 is a diagram of another structure of an electronic device according to an embodiment of this application. The electronic device 100 may be the electronic device in the wireless communication system shown in FIG. 1.

As shown in FIG. 5, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, an acceleration sensor 180E, a distance sensor 180F, a fingerprint sensor 180H, a temperature sensor 180J, a touch sensor 180K, an ambient light sensor 180L, and the like.

It may be understood that the structure shown in this embodiment of this application does not constitute a specific limitation on the electronic device 100. In some other embodiments of this application, the electronic device 100 may include more or fewer components than those shown in the figure, or a combination of some components, or splits from some components, or a different component layout. The components shown in the figure may be implemented by hardware, software, or a combination of software and hardware.

The processor 110 may include one or more processing modules. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing modules may be independent components, or may be integrated into one or more processors.

The controller may be a nerve center and a command center of the electronic device 100. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency. In this embodiment of this application, the memory stores an instruction that enables the electronic device to perform the BLE-based communication method provided in embodiments of this application. For the BLE-based communication method provided in this application, refer to related descriptions in subsequent embodiments. In some embodiments of this application, the memory may further store emergency help seeking information that is preset by a user.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to: perform audio communication, and sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI interface, to implement a display function of the electronic device 100.

The GPIO interface may be configured by software. The GPIO interface may be configured for a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to exchange data between the electronic device 100 and a peripheral device, or may be configured to connect to a headset for playing audio through the headset. The interface may be further configured to connect to another electronic device, for example, an AR device.

It may be understood that an interface connection relationship between the modules illustrated in embodiments of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2. In this embodiment of this application, the electronic device 100 supports BLE, and may communicate with another device based on BLE. The electronic device 100 may send or scan, on a BLE broadcast channel, a BLE broadcast provided in this embodiment of this application.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS). In some embodiments of this application, the electronic device may obtain location information of the electronic device 100 by using the wireless communication technology.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change displayed information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and the like of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation or the like on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transmission mode between human brain neurons, and may further continuously perform self-learning. The NPU may be configured to implement an application like intelligent cognition of the electronic device 100, for example, image recognition, facial recognition, voice recognition, and text understanding.

The external memory interface 120 may be configured to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications and data processing of the electronic device 100. The internal memory 121 may include a program storage area and a data storage area. The program storage area may store an operating system, an application necessary to at least one function (for example, a voice playing function or an image playing function), and the like. The data storage area may store data (such as audio data and an address book) and the like that are created during use of the electronic device 100. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to: encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice. In some embodiments of this application, the receiver may be configured to receive a speech that is input by the user and that is used to send a help seeking advertising packet.

The microphone 170C, also referred to as a "mike" or a "mic", is configured to convert a sound signal into an electrical signal. When making a call or sending speech information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like. In some embodiments of this application, the microphone may be configured to receive a speech that is input by the user and that is used to send a help seeking advertising packet.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to a first pressure threshold is performed on an SMS message application icon, an instruction for creating a new SMS message is executed. In some embodiments of this application, the pressure sensor may be configured to detect a gesture that is input by the user and that is used to send a help seeking advertising packet.

The gyroscope sensor 180B may be configured to determine a moving posture of the electronic device 100. In some embodiments, an angular velocity of the electronic device 100 around three axes (axes x, y, and z) may be determined through the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may be further used in a navigation scenario and a somatic game scenario.

The barometric pressure sensor 180C is configured to measure barometric pressure. **In** some embodiments, the electronic device 100 calculates an altitude through the barometric pressure measured by the barometric pressure sensor 180C, to assist in positioning and navigation.

The acceleration sensor 180E may detect accelerations in various directions (usually on three axes) of the electronic device 100. A magnitude and a direction of gravity may be detected when the electronic device 100 is still. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor (not shown in the figure) to detect whether the electronic device 100 is in a pocket, to avoid an accidental touch.

The fingerprint sensor 180H is configured to collect a fingerprint. The electronic device 100 may implement fingerprint unlock, application access lock, fingerprint photographing, fingerprint-based call answering, and the like by using a feature of the collected fingerprint.

The temperature sensor 180J is configured to detect a temperature. In some embodiments, the electronic device 100 executes a temperature processing strategy through the temperature detected by the temperature sensor 180J. For example, when the temperature reported by the temperature sensor 180J exceeds a threshold, the electronic device 100 lowers performance of a processor located near the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown due to a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided on the display 194. In some other embodiments, the touch sensor 180K may alternatively be disposed on a surface of the electronic device 100 at a location different from that of the display 194.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effect. The motor 191 may also correspond to different vibration feedback effect for touch operations performed on different areas of the display 194. Different application scenarios (for example, a time reminder, information receiving, an alarm clock, and a game) may also correspond to different vibration feedback effect. Touch vibration feedback effect may be further customized.

The indicator 192 may be an indicator light, and may be used to indicate a charging status and a power change, or may be used to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as calling and data communication. In some embodiments, the electronic device 100 uses an eSIM, namely, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, a cloud architecture, or the like. This is not limited herein.

It should be noted that a device information version number described in this application may also be understood as a device information identifier or a device information index, and the device information identifier or the device information index is used to mark device information.

Generally, a device information identifier or a device information index included in a BLE broadcast may be used to mark current device information of a broadcast sender of the BLE broadcast. A device information identifier or a device information index included in device information, of another device, stored in a specific device is used to mark the device information, of the another device, stored in the specific device. For example, a specific representation form of the device information version number, the device information identifier, or the device information index may be a number, a character, a character string, or the like, or may be a mixed form including a number and a character, or the like. This is specifically determined according to an actual scenario, and is not limited herein.

For ease of description, the following embodiments of this application mainly take the device information version number as an example for illustrative description.

Based on the wireless communication system shown in FIG. 1 and the electronic device shown in FIG. 4 or FIG. 5, the following describes, with reference to a specific application scenario, a BLE-based communication method provided in embodiments of this application.

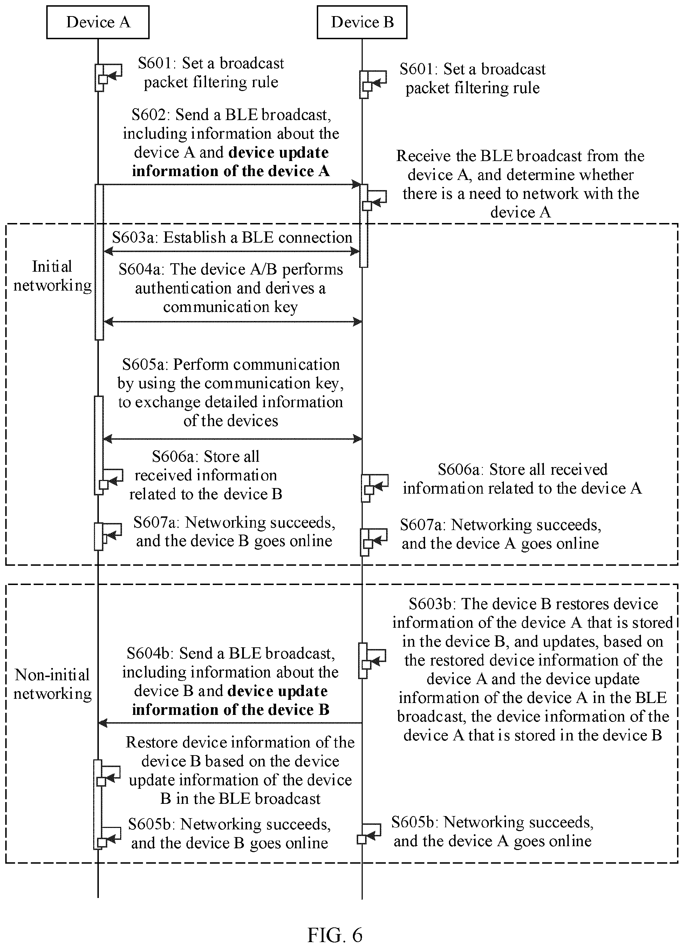

FIG. 6 is a schematic flowchart of a BLE-based communication method according to an embodiment of this application. An electronic device A (a device A for short) in FIG. 6 is equivalent to a second device, and an electronic device B (a device B for short) is equivalent to a first device. The method may include the following steps.

S601: The device A and the device B respectively set broadcast packet filtering rules.

For example, a broadcast packet filtering rule of a specific device may usually include information such as account information of a device that the device is concerned about and/or a device ID of the device that the device is concerned about. This is not limited herein. It may be understood that, in the broadcast packet filtering rule set by the specific device, the included account information of the specific device that the device is concerned about is usually a short value of the account information, and the device ID is usually a short value of the device ID. This is not limited herein.

For example, it is assumed that the broadcast packet filtering rule of the device B includes a device ID of the device A, a device ID of a device C, and a device ID of a device D. In this case, when the device B receives a BLE broadcast from the device A, the device B may check, based on the device ID of the device A that is extracted from the BLE broadcast and information stored in the device B, for example, information such as the broadcast packet filtering rule, whether the device A is networked and goes online in the device B. If the device A is already networked and goes online in the device B, it indicates that the device A completes networking with the device B. In this case, the device B may ignore the BLE broadcast. If the device A is not networked and does not go online in the device B, the device B checks whether the device B and the device A meet a networking condition or whether the device B and the device A have a trust relationship. If the device B and the device A do not meet the networking condition or do not have the trust relationship, the device B may ignore the BLE broadcast. If the device B and the device A meet the networking condition or have the trust relationship, for example, when a short value of account information of the device A is the same as a short value of account information of the device B, or when the device A and the device B have another trust relationship, the device B further determines a next operation manner.

For another example, it is assumed that the broadcast packet filtering rule of the device B includes information about a device C and information about a device D. In this case, when the device B receives a BLE broadcast from the device A, because the device A is not a device that the device B is concerned about, the device B ignores the BLE broadcast.

S602: The device A sends a BLE broadcast.

The device A may broadcast the BLE broadcast to a peripheral device by using a BLE broadcast mechanism. For example, the following mainly uses an example in which the peripheral device of the device A is the device B for illustrative description. Correspondingly, the device B receives the BLE broadcast from the device A. A length of the BLE broadcast in this embodiment of this application may be 31 bytes or the like. This is specifically determined based on an actual scenario, and is not limited herein.

It should be noted that the BLE broadcast may include information about the device A and device update information of the device A. It should be noted that the BLE broadcast may include a plurality of fields, and the fields are used to carry different information. For example, in the BLE broadcast, a first field is used to carry a device information version number of the device, and a second field is used to carry the device update information of the device. This is not limited herein.

Herein, the information about the device A includes one or more of the following: the short value of the account information of the device A, a short value of the device ID of the device A, the device information version number (a first device information version number) of the device A, a salt value for broadcast encryption, and the like. For example, in this application, a length of the short value of the account information of the device A is usually 2 bytes, a length of the short value of the device ID of the device A is usually 8 bytes, a length of the device information version number of the device A is usually 2 bytes, a length of the salt value for broadcast encryption is usually 2 bytes, and the like. This is specifically determined based on an actual scenario, and is not limited herein.

The device update information of the device A includes an update part (or understood as a difference part or a differential part), between information of the device A during current broadcasting and information of the device A during broadcasting for the first time, of the information of the device A, and a check value corresponding to the update part. For example, it is assumed that during broadcasting for the first time, Wi-Fi of the device A is not turned on, a screen of the device A is not lit up, and a flashlight switch of the device A is turned off; and during current broadcasting, Wi-Fi of the device A is turned on, a screen of the device A is lit up, and a flashlight switch of the device A is still turned off. In this case, the update part of the information about the device A is that Wi-Fi is turned on and the screen of the device A is lit up. For example, a length of the check value corresponding to the update part in this application is usually 1 byte.

It may be understood that the device update information of the device A may be plaintext information (that is, both the information update part of the device A and the check value corresponding to the update part are plaintext information), or the device update information of the device A may be ciphertext information obtained by encrypting, by using a broadcast key, the information update part of the device A and the check value corresponding to the update part. In other words, a step of whether to encrypt, by using the broadcast key of the device A, the device update information of the device A that is carried in the BLE broadcast sent by the device A is an optional step, and the encryption helps improve broadcast security and prevent an attacker from attacking.

It may be understood that, if the device update information of the device A is plaintext information, an integrity check may be subsequently performed on the information update part of the device A directly based on the check value; or if the device update information of the device A is ciphertext information, the ciphertext information needs to be first decrypted based on the salt value for broadcast encryption and the broadcast key of the device A, and then an integrity check is performed on the information update part of the device A based on the check value, so as to perform a subsequent procedure. For ease of understanding, the following mainly uses an example in which the device update information of the device A is ciphertext information for illustrative description.

Specifically, if the device B determines, based on the short value of the account information of the device A and/or the short value of the device ID of the device A that are included in the BLE broadcast and with reference to the stored information of the device B, that the device B and the device A meet the networking condition or have the trust relationship, the device B may further determine a next operation that needs to be performed. Herein, the next operation may be performing an initial networking process (steps S603a to S607a in FIG. 6), or performing a non-initial networking process (steps S603b to S606b in FIG. 6).

When any one of the following cases occurs, the initial networking process shown in steps S603a to S605a in FIG. 6 needs to be performed.

Case 1: When the device B does not store a device information version number (a second device information version number) of the device A, the initial networking process may be performed. Herein, a reason why the device B does not store the device information version number of the device A may be as follows: 1. The device A and the device B are not networked. 2. The device A and the device B are networked; however, because the device B is powered off and restarted after being networked, device information of the device A that is stored in the device B is deleted.

Case 2: When the BLE broadcast includes the device information version number (the first device information version number) of the device A, the device B stores a device information version number (a second device information version number) of the device A, and the device information version number of the device A that is included in the BLE broadcast is inconsistent with the device information version number of the device A that is stored in the device B, the initial networking process may be performed.

Optionally, when the BLE broadcast includes the device information version number of the device A, the device B stores a device information version number of the device A, and the device information version number of the device A that is included in the BLE broadcast is consistent with the device information version number of the device A that is stored in the device B, the non-initial networking process is performed, that is, steps S603b to S606b in FIG. 6 are performed.

The initial networking process is as follows:
S603a: The device B and the device A establish a BLE connection.

Specifically, the device B initiates a BLE connection request to the device A, to request to establish the BLE connection between the device B and the device A. For a detailed process of establishing the BLE connection between the device B and the device A, refer to descriptions of a BLE GATT protocol. Details are not described herein again.

S604a: The device A/B performs authentication and derives a communication key.

The device A and the device B may interact with each other, to complete identity confirmation or authentication of the devices, and generate the communication key between the devices in this process. The communication key may be a symmetric key or the like. This is not limited herein.

Optionally, in the foregoing case 3, step S604a is an optional step if a reason why the device information version number of the device A changes is that current device information changes greatly compared with device information of the device A during broadcasting for the first time, and a data amount of a difference part between the current device information and the device information of the device A during broadcasting for the first time exceeds a range of a data amount that the broadcast can carry. In other words, in the foregoing case 2, the BLE connection may be established, but authentication is not performed, to speed up an online process.

S605a: Perform communication by using the communication key, to exchange detailed information of the devices.

The device A and the device B may respectively generate device information version numbers. It may be understood that the device information version number of the device A is used to identify a current version of the device information of the device A, and the device information version number of the device B is used to identify a current version of the device information of the device B.

Optionally, when respectively generating the device information version numbers, the device A and the device B may further generate respective broadcast keys. It may be understood that the broadcast key of the device A is related to or matches the device information version number of the device A, and the broadcast key of the device B is related to or matches the device information version number of the device B. In other words, when a device information version number of a specific device changes, a broadcast key of the device also changes.

Usually, the device information version number may be generated randomly or incrementally, provided that version numbers are not repeated. In addition, because the version number needs to be carried in a broadcast, a length of the version number may be set to 2 bytes, to reduce overheads of the broadcast.

It may be understood that there are three main reasons why the device information version number changes: 1. Current device information changes greatly compared with device information of the device A during broadcasting for the first time, and a data amount of a difference part between the current device information and the device information of the device A during broadcasting for the first time exceeds a range of a data amount that the broadcast can carry. 2. Key information in the current device information changes, for example, a device name changes, and consequently, including the key information in a broadcast may cause a privacy risk. 3. A trust relationship between the devices changes, for example, a device account is changed.

It may be understood that the device A may send the detailed information of the device A to the device B by using the communication key. The detailed information of the device A may include the device information version number of the device A, or the detailed information of the device A may include the device information version number of the device A and the broadcast key of the device A. Correspondingly, the device B may also send the detailed information of the device B to the device A by using the communication key. The detailed information of the device B may include the device information version number of the device B, or the detailed information of the device B may include information such as the device information version number of the device B and the broadcast key of the device B. Optionally, the detailed information of the devices may further include the communication key between the devices, MAC address information, IP address information, complete device IDs of the devices, complete account information, version numbers of the devices, Bluetooth version numbers, device names, and the like. This is not limited herein.

S606a: The device A stores all received information related to the device B, and the device B stores all received information related to the device A.

Specifically, the device A may persistently store all received information related to the device B in a local file system (a local disk) of the device A or in a cloud, and the device B may persistently store all received information related to the device A in a local file system of the device B or in a cloud. This is not limited herein.

Optionally, the device A may alternatively store all received information related to the device B only in a memory, and the device B may alternatively store all received information related to the device A only in a memory. It may be understood that, when the information is stored in the memory, after the device is powered off and restarted, the information stored in the device is initialized, cleared, or deleted.

S607a: Networking succeeds, the device B goes online in the device A, and the device A goes online in the device B.

It should be noted that, in this embodiment of this application, after the device A and the device B are networked for the first time, the device A stores all information related to the device B, for example, the device information version number of the device B, the broadcast key of the device B, and the communication key between the device A and the device B. Similarly, the device B also stores all information related to the device A, for example, the device information version number of the device A, the broadcast key of the device A, and the communication key between the device A and the device B. Even if the device goes offline subsequently, device information of a peer device that is stored in the device is not deleted. However, the device information of the peer device that is stored in the device can be deleted when a trust relationship between the devices is canceled.

The non-initial networking process is as follows:
S603b: The device B restores the device information of the device A that is stored in the device B, and updates, based on the restored device information of the device A and the device update information of the device A in the BLE broadcast, the device information of the device A that is stored in the device B.

It should be noted that, if the device information version number of the device A in the BLE broadcast is consistent with the device information version number of the device A that is stored in the device B, the device B may restore the device information of the device A that is stored in the device B. Herein, the device information of the device A that is stored in the device B may be the device information of the device A that is obtained through the initial networking. It may be understood that "restoration" in this embodiment of this application may be understood as rereading or reloading the device information of the device A that is stored in the device B. Further, the device B may update, based on the restored device information of the device A and the device update information of the device A in the BLE broadcast, the device information of the device A that is stored in the device B. Specifically, a detailed process is described as follows:
In an implementation, the device B may extract the broadcast key of the device A from the device information of the device A that is stored in the device B, and decrypt the ciphertext information by using the broadcast key, to obtain plaintext information of the information update part of the device A and plaintext information of the check value corresponding to the update part. Then, the integrity check is performed on the information update part of the device A based on the check value.

For example, the device B may calculate the information update part of the device A according to a preset or preconfigured operation method to obtain a short value, and compare whether the short value obtained through calculation is the same as the check value. If the short value obtained through calculation is the same as the check value, it is determined that content of the information update part of the device A is complete. In this case, latest device information of the device A may be generated subsequently based on the device information of the device A that is stored in the device B and in combination with the information update part of the device A, and the generated latest device information of the device A is stored. On the contrary, if the short value obtained through calculation is different from the check value, the initial networking process of the foregoing steps S603a to S605a is performed. Herein, the device information of the device A that is stored in the device B may include one or more of the following: a communication key between the device A and the device B, MAC address information of the device A, IP address information of the device A, a complete device ID of the device A, complete account information of the device A, a version number of the device A, a Bluetooth version number of the device A, a device name of the device A, the device information version number of the device A, the device information version number of the device A, the broadcast key of the device A, and the like. This is not limited herein. Correspondingly, device information of the device B that is stored in the device A may include one or more of the following: the communication key between the device A and the device B, MAC address information of the device B, IP address information of the device B, a complete device ID of the device B, complete account information of the device B, a version number of the device B, a Bluetooth version number of the device B, a device name of the device B, a device information version number of the device B, a device information version number of the device B, a broadcast key of the device B, and the like. This is not limited herein.

Optionally, the device B may further determine, based on information carried in the BLE broadcast, whether to restore communication between the device B and the device A. Herein, that the device B restores communication between the device B and the device A may be understood as that the device B communicates with the device A by using the communication key between the device B and the device A (that is, the device B sends communication data to the device A by using the communication key between the device A and the device B that is stored in the device B). Specifically, there may be the following several implementations.

In an implementation, when the device information version number of the device A that is included in the BLE broadcast is the same as the device information version number of the device A that is stored in the device B, it is determined that communication between the device B and the device A may be directly restored. In other words, when it is determined that the device information version number of the device A that is included in the BLE broadcast is the same as the device information version number of the device A that is stored in the device B, the device B may immediately restore communication between the device B and the device A (that is, the device B sends the communication data to the device A by using the communication key between the device A and the device B that is stored in the device B), which helps improve communication efficiency.

In another implementation, the BLE broadcast may further include a set of communication key short values or a list of communication key short values, where the set of communication key short values or the list of communication key short values includes one or more communication key short values. For example, the plurality of communication key short values may include a short value of the communication key between the device A and the device B. Therefore, after receiving the BLE broadcast, the device B may calculate, according to a preset or preconfigured operation method, the broadcast key of the device A that is stored in the device B, to obtain a short value, and compare whether the short value of the communication key between the device A and the device B that is carried in the BLE broadcast is the same as the short value of the communication key between the device A and the device B that is obtained through calculation. If the short values are the same, communication between the device B and the device A may be restored.

It should be noted that, if the BLE broadcast carries short values of communication keys between a plurality of devices and the device A, the device B needs to traverse all short values to perform matching check. When any one of the short values of the plurality of communication keys carried in the BLE broadcast is the same as the short value of the communication key between the device A and the device B that is obtained through calculation, communication between the device B and the device A may be restored; or if the BLE broadcast does not include a short value that is the same as the short value of the communication key between the device A and the device B that is obtained through calculation, communication cannot be restored. It may be understood that, if communication between the devices cannot be restored, the initial networking process of the foregoing steps S603a to S605a may be performed again.

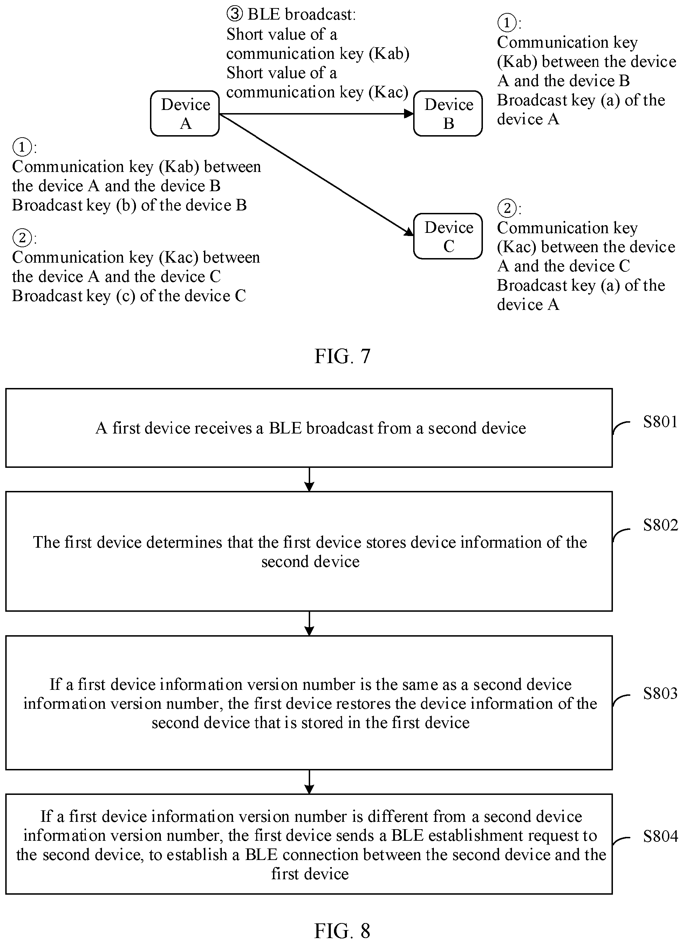

For example, FIG. 7 is a diagram of restoring communication between devices according to an embodiment of this application. Details are shown in FIG. 7.
①. After the device A and the device B perform authentication, the device A and the device B store a communication key (Kab) between the device A and the device B. The device A stores a broadcast key (b) of the device B, and the device B stores a broadcast key (a) of the device A.
②. After the device A and the device C perform authentication, the device A and the device C store a communication key (Kac) between the device A and the device C. The device A stores a broadcast key (c) of the device C, and the device C stores a broadcast key (a) of the device A.
③. After receiving the BLE broadcast sent by the device A, the device B decrypts broadcast content by using the broadcast key (a) of the device A and checks whether the broadcast carries a short value of the communication key (Kab). If the broadcast carries the short value, it is considered that the communication key (Kab) between the device A and the device B can be restored, that is, communication between the device A and the device B can be restored. If the broadcast does not carry the short value, it is considered that communication between the device A and the device B cannot be restored. Correspondingly, after receiving the BLE broadcast sent by the device A, the device C decrypts broadcast content by using the broadcast key (a) of the device A and checks whether the broadcast carries a short value of the communication key (Kac). If the broadcast carries the short value, it is considered that the communication key (Kac) between the device A and the device C can be restored, that is, communication between the device A and the device C can be restored. If the broadcast does not carry the short value, it is considered that communication between the device A and the device C cannot be restored.

It may be understood that a length of the short value of the communication key in this embodiment of this application may be 3 bytes, to reduce broadcast overheads.

It may be understood that the set of communication key short values or the list of communication key short values in this application may be carried in a TLV format. The TLV is a variable format. T indicates a type (Type), L indicates a length (Length), and V indicates a specific value (Value). For example, the device A includes the communication key of the device B and a communication key of the device C. When T is 1, it indicates that the type is a communication key short value; when L is 6, it indicates that a length of the communication key short value is 6 bytes in total, that is, the communication key short values of the device B and the device C are 3 bytes each, and therefore there are 6 bytes in total; and V is a communication key short value of the device B and a communication key short value of the device C.

It should be noted that a method for calculating the short value corresponding to the information update part of the device A may be the same as or different from a method for calculating a short value corresponding to the broadcast key of the device A that is stored in the device B, which is not limited herein. The preset or preconfigured short value calculation method in this embodiment of this application may be specifically a Hash algorithm. For example, the Hash algorithm may include an MD Hash algorithm, an SHA Hash algorithm, an SM3 cryptographic Hash algorithm, and the like. This is not limited herein. The MD Hash algorithm may include MD2, MD4, MD5, and the like. The SHA Hash algorithm may include SHA-1, SHA-224, SHA-256, SHA-384, SHA-512, and the like. This is not limited herein.

S604b: The device B sends a BLE broadcast.

After the device B stores the device information of the device A based on the device update information of the device A that is carried in the BLE broadcast sent by the device A, the device B may return the BLE broadcast to the peripheral device by using the BLE broadcast mechanism. For example, the following mainly uses an example in which the peripheral device of the device B is the device A for illustrative description. Correspondingly, the device A receives the BLE broadcast from the device B.

The BLE broadcast returned by the device B may include information about the device B and device update information of the device B. Specifically, for descriptions of the BLE broadcast sent by the device B and a process in which the device A receives the BLE broadcast from the device B and processes the BLE broadcast, refer to the foregoing descriptions of the BLE broadcast sent by the device A and the descriptions of the process in which the device B receives the BLE broadcast from the device A and processes the BLE broadcast. Details are not described herein again.

S605b: Networking succeeds, the device B goes online in the device A, and the device A goes online in the device B.

In a non-initial networking scenario, networking between devices can be implemented without a BLE connection, and a communication key can be restored. This improves networking and online efficiency.

It may be understood that, when any step or operation in the non-initial networking process in S604b to S606b fails to be performed, the initial networking process in S603a to S605a may be performed again, to implement networking between devices.

It should be noted that, in embodiments of this application, in an initial networking scenario, generation and exchange of a device information version number and a broadcast key of a device need to be completed, and storage of device information, a communication key, a device information version number, and a broadcast key needs to be completed. The non-initial networking scenario may be understood as a scenario in which networking between devices has succeeded, but the network is disconnected because the devices are powered off or a distance between the devices is too long, and subsequently the devices need to be networked again because the devices are powered on again or the devices are close to each other. In the non-initial networking scenario, because a device stores information such as device information of another device, a device information version number of the another device, a broadcast key of the another device, and a communication key between the another device and the device, and stores device information of the device, a device information version number of the device, and a broadcast key of the device, in the non-initial networking scenario, a device information version number in a BLE broadcast and a differential part are extracted, and then are combined with device information obtained last time, to implement quick networking, without a time-consuming and resource-consuming process of establishing a BLE connection and performing authentication.

FIG. 8 is another schematic flowchart of a BLE-based communication method according to an embodiment of this application. As shown in FIG. 8, the communication method includes the following step S801 and step S803. The method shown in FIG. 8 may be performed by a first device or a chip in a first device. For ease of description, an example in which the method is performed by the first device is used for description in FIG. 8.

S801: The first device receives a BLE broadcast from a second device.

In some feasible implementations, the second device sends the BLE broadcast, and correspondingly, the first device receives the BLE broadcast from the second device. The BLE broadcast includes a first field, the first field is used to carry a first device information version number of the second device, and the first device information version number indicates a version of current device information of the second device. It should be noted that a device information version number in this application may also be understood as a device information identifier or a device information index, and the device information identifier or the device information index is used to mark device information. For example, a first device information identifier or a first device information index included in the BLE broadcast sent by the second device is used to mark the current device information of the second device.

Herein, for a detailed understanding of the BLE broadcast, refer to related descriptions in step S602 in FIG. 6. Details are not described herein again. The second device in FIG. 8 is equivalent to the electronic device A (the device A for short) in FIG. 6, and the first device is equivalent to the electronic device B (the device B for short).

Optionally, before step S801, the first device and the second device may separately set a broadcast packet filtering rule, to prevent the devices from being woke up and notified by a non-concerned BLE broadcast.

S802: The first device determines that the first device stores device information of the second device.

In some feasible implementations, the first device determines whether the first device stores the device information of the second device. When the first device determines that the first device does not store the device information of the second device, the first device performs an initial networking process. Herein, for an understanding of the initial networking process, refer to related descriptions of the initial networking process in FIG. 6. Details are not described herein again. When the first device determines that the first device stores the device information of the second device, the first device reads a second device information version number of the second device that is included in the stored device information of the second device. The second device information version number indicates a version of the device information of the second device that is stored in the first device. Further, the first device compares whether the first device information version number is the same as the second device information version number.

S803: If the first device information version number is the same as the second device information version number, restore the device information of the second device that is stored in the first device.

In some feasible implementations, if the first device information version number is the same as the second device information version number, the first device restores the device information of the second device that is stored in the first device. Optionally, the first device may further update, based on the restored device information of the second device and device update information of the second device in the BLE broadcast, the device information of the second device that is stored in the device B. In other words, when the first device information version number is the same as the second device information version number, a non-initial networking process may be performed. Herein, for detailed descriptions of S803, refer to related descriptions of the non-initial networking process in FIG. 6. Details are not described herein again.

S804: If the first device information version number is different from the second device information version number, send a BLE establishment request to the second device, to establish a BLE connection between the second device and the first device.

In some feasible implementations, if the first device information version number is different from the second device information version number, the BLE establishment request is sent to the second device, to establish the BLE connection between the second device and the first device. Optionally, the first device may further receive the device information of the second device from the second device through the BLE connection, and store the device information of the second device from the second device. In other words, when the first device information version number is different from the second device information version number, an initial networking process may be performed. Herein, for detailed descriptions of S803, refer to related descriptions of the initial networking process in FIG. 6. Details are not described herein again.

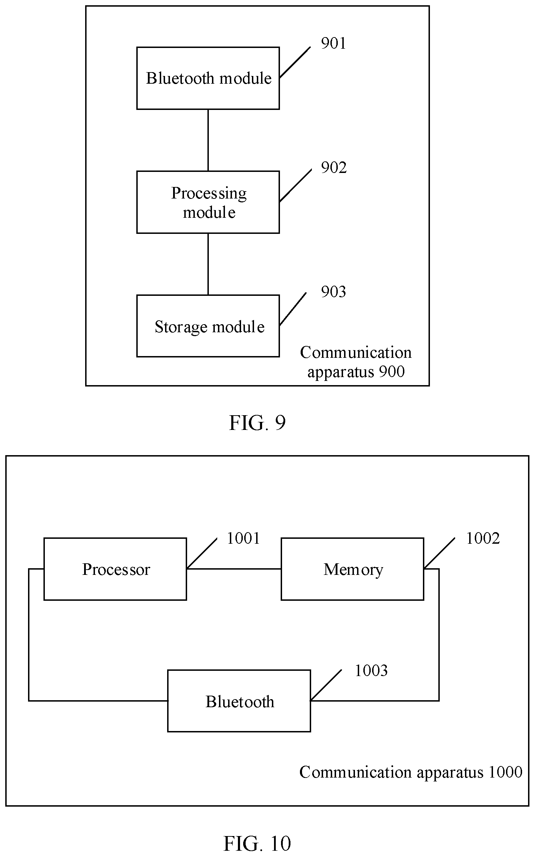

The following describes in detail communication apparatuses according to this application with reference to FIG. 9 and FIG. 10.

FIG. 9 is a diagram of a structure of a communication apparatus according to an embodiment of this application. A communication apparatus 900 shown in FIG. 9 may be configured to perform some or all functions of the terminal device (for example, a device A or a device B) in the method embodiments described in FIG. 6 and/or FIG. 8. The apparatus may be a terminal device, or may be an apparatus in a terminal device, or may be an apparatus that can be used in a manner of matching a terminal device. The communication apparatus 900 may alternatively be a chip system. The communication apparatus shown in FIG. 9 may include a Bluetooth module 901, a processing module 902, and a storage module 903. The processing module 902 is configured to perform data processing. The Bluetooth module 901 is configured to receive or send data. The storage module 903 is configured to store data.

In an implementation,
the Bluetooth module 901 is configured to receive a Bluetooth low energy BLE broadcast from a second device, where the BLE broadcast includes a first field, the first field is used to carry a first device information version number of the second device, and the first device information version number indicates a version of current device information of the second device.

The processing module 902 is configured to determine that the storage module 903 of the first device stores device information of the second device, where the device information of the second device includes a second device information version number of the second device, and the second device information version number indicates a version of the device information of the second device that is stored in the storage module 903.

If the first device information version number is the same as the second device information version number, the processing module 902 restores the device information of the second device that is stored in the storage module 903.

In a possible implementation, the processing module 902 is further configured to: if the first device information version number is different from the second device information version number, send a BLE establishment request to the second device by using the Bluetooth module 901, to establish a BLE connection between the second device and the first device.

The Bluetooth module 901 is further configured to receive the device information of the second device from the second device through the BLE connection.

The storage module 903 is configured to store the device information of the second device from the second device.

In a possible implementation, the BLE broadcast further includes a second field, and the second field is used to carry device update information of the second device.

The processing module 902 is further configured to:
update the device information of the second device based on the restored device information of the second device and the device update information of the second device.

In a possible implementation, the device update information of the second device includes an information update part and a check value corresponding to the information update part.

When updating the device information of the second device based on the restored device information of the second device and the device update information of the second device, the processing module 902 is configured to:
perform integrity check on the information update part based on the check value; and
if a check result of the integrity check is that the check succeeds, update the device information of the second device based on the information update part and the device information of the second device that is stored in the second device, and store updated device information of the second device.

In a possible implementation, the BLE broadcast further includes a salt value for broadcast encryption, and the device update information of the second device is ciphertext information for encrypting, by using a broadcast key of the second device, the information update part and the check value corresponding to the information update part.

Before performing integrity check on the information update part based on the check value, the processing module 902 is configured to:
decrypt the ciphertext information based on the salt value for broadcast encryption and the broadcast key of the second device, to obtain the information update part and the check value corresponding to the information update part.

In a possible implementation, the BLE broadcast further includes a list of communication key short values, and the device information of the second device that is stored in the storage module 903 includes a communication key between the second device and the first device.

The processing module 902 is further configured to:
determine, by the first device, a communication key short value corresponding to the communication key between the second device and the first device; and
if the list of communication key short values includes the communication key short value, send communication data to the second device by using the Bluetooth module 901 and by using the communication key between the second device and the first device that is stored in the storage module 903.

In a possible implementation, the device information of the second device that is stored in the storage module 903 includes a communication key between the second device and the first device.

The Bluetooth module 901 is further configured to:
send communication data to the second device by using the communication key between the second device and the first device that is stored in the storage module 903.

In a possible implementation, the BLE broadcast further includes a short value of account information of the second device and/or a short value of a device identifier of the second device.

Before determining that the first device stores device information of the second device, the processing module 902 is further configured to:
determine, based on the short value of the account information of the second device and/or the short value of the device identifier of the second device, whether a trust relationship exists between the second device and the first device; and
when the first device determines that the trust relationship exists between the second device and the first device, determine that the first device stores the device information of the second device.

In a possible implementation, the Bluetooth module 901 is further configured to:
send a BLE broadcast, where the BLE broadcast is used by the second device to restore and update device information of the first device that is stored in the second device.

In another implementation,
the Bluetooth module 901 is configured to send a Bluetooth low energy BLE broadcast to a first device, where the BLE broadcast includes a first field, the first field is used to carry a first device information version number of a second device, and the first device information version number indicates a version of current device information of the second device.

In a possible implementation, the Bluetooth module 901 is further configured to:
receive a BLE establishment request from the first device, to establish a BLE connection between the second device and the first device; and
send device information of the second device to the first device through the BLE connection.

In a possible implementation, the BLE broadcast further includes a second field, and the second field is used to carry device update information of the second device.

In a possible implementation, the device update information of the second device includes an information update part and a check value corresponding to the information update part.

In a possible implementation, the BLE broadcast further includes a salt value for broadcast encryption, and the device update information of the second device is ciphertext information for encrypting, by using a broadcast key of the second device, the information update part and the check value corresponding to the information update part.

In a possible implementation, the Bluetooth module 901 is further configured to:
receive communication data from the first device.

In a possible implementation, the Bluetooth module 901 is further configured to:
receive a BLE broadcast from the first device.

The apparatus further includes the processing module 902.

The processing module 902 is configured to: restore and update, based on the BLE broadcast, device information of the first device that is stored in the storage module 903 of the second device.

For another possible implementation of the communication apparatus, refer to related descriptions of the functions of the terminal device in the method embodiments corresponding to FIG. 6 to FIG. 8. Details are not described herein again.

FIG. 10 is a diagram of another structure of a communication apparatus according to an embodiment of this application. As shown in FIG. 10, the communication apparatus 1000 may be the terminal device described in embodiments of this application, and is configured to implement the functions of the terminal device in FIG. 6 and/or FIG. 8. For ease of description, FIG. 10 shows only main components of the terminal device. As shown in FIG. 10, the communication apparatus 1000 includes a processor 1001, a memory 1002, and Bluetooth 1003. The processor 1001 is mainly configured to: process a communication protocol and communication data, control the entire communication apparatus 1000, execute a software program, and process data of the software program. The memory 1002 is mainly configured to store the software program and data. The Bluetooth 1003 is mainly used to receive data or send data through a Bluetooth air interface.

That the communication apparatus 1000 is a mobile phone is used as an example. After the communication apparatus 1000 is powered on, the processor 1001 may read a software program in the memory 1002, interpret and execute instructions of the software program, and process data of the software program. When data needs to be sent by using the Bluetooth 1003, the processor processes the to-be-sent data, and then sends the data by using Bluetooth. When data is sent to the communication apparatus 1000, the processor 1001 receives a signal by using the Bluetooth 1003, and converts the received signal into data, to process the data.

A person skilled in the art may understand that, for ease of description, FIG. 10 shows only one memory and one processor. In some embodiments, the communication apparatus 1000 may include a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process the communication protocol and the communication data, and the central processing unit is mainly configured to: control the entire communication apparatus 1000, execute the software program, and process the data of the software program. The processor in FIG. 10 integrates functions of the baseband processor and the central processing unit. A person skilled in the art may understand that the baseband processor and the central processing unit may be alternatively processors independent of each other, and are connected to each other by using a technology such as a bus. The communication apparatus 1000 may include a plurality of baseband processors to adapt to different network standards. The communication apparatus 1000 may include a plurality of central processing units to enhance a processing capability of the communication apparatus 1000. Components of the communication apparatus 1000 may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in a storage unit in a form of a software program, and the processor executes the software program to implement a baseband processing function.

In an optional implementation, memories may include a read-only memory and a random access memory, and provide instructions and data for the processor. Some of the memories may further include a non-volatile random access memory and the like. This is not limited herein.

An embodiment of this application further provides a computer-readable storage medium. The computer-readable storage medium stores instructions. When the instructions are run on a processor, method procedures in the foregoing method embodiments are implemented.

An embodiment of this application further provides a computer program product. When the computer program product runs on a processor, method procedures in the foregoing method embodiments are implemented.

A person of ordinary skill in the art may be aware that, in combination with examples described in embodiments disclosed in this specification, units and steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, division into units is merely logical function division. Units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computing device (which may be a personal computer, a server, a network device, or the like) to perform all or some of the steps of the methods described in embodiments of this application. The computer-readable storage medium may be any usable medium that can be accessed by a computer. For example, the computer-readable medium may include but is not limited to: a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, another optical disc memory, a magnetic disk storage medium, or another magnetic storage device, or any other medium that can be used to carry or store expected program code in a form of an instruction or a data structure and that can be accessed by a computer. In addition, by way of example and not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, wherein the method comprises:
receiving, by a first device, a Bluetooth low energy BLE broadcast from a second device, wherein the BLE broadcast comprises a first field, the first field is used to carry a first device information version number of the second device, and the first device information version number indicates a version of current device information of the second device;
determining, by the first device, that the first device stores device information of the second device, wherein the device information of the second device comprises a second device information version number of the second device, and the second device information version number indicates a version of the device information of the second device that is stored in the first device; and
if the first device information version number is the same as the second device information version number, restoring, by the first device, the device information of the second device that is stored in the first device.

2. The method according to claim 1, wherein the method further comprises:
if the first device information version number is different from the second device information version number, sending, by the first device, a BLE establishment request to the second device, to establish a BLE connection between the second device and the first device;
receiving, by the first device, the device information of the second device from the second device through the BLE connection; and
storing, by the first device, the device information of the second device from the second device.

3. The method according to claim 1, wherein the BLE broadcast further comprises a second field, and the second field is used to carry device update information of the second device; and
the method further comprises:
updating, by the first device, the device information of the second device based on the restored device information of the second device and the device update information of the second device.

4. The method according to claim 3, wherein the device update information of the second device comprises an information update part and a check value corresponding to the information update part; and
the updating, by the first device, the device information of the second device based on the restored device information of the second device and the device update information of the second device comprises:
performing, by the first device, integrity check on the information update part based on the check value; and
if a check result of the integrity check is that the check succeeds, updating, by the first device, the device information of the second device based on the information update part and the device information of the second device that is stored in the second device, and storing updated device information of the second device.

5. The method according to claim 4, wherein the BLE broadcast further comprises a salt value for broadcast encryption, and the device update information of the second device is ciphertext information for encrypting, by using a broadcast key of the second device, the information update part and the check value corresponding to the information update part; and
before the performing, by the first device, integrity check on the information update part based on the check value, the method further comprises:
decrypting, by the first device, the ciphertext information based on the salt value for broadcast encryption and the broadcast key of the second device, to obtain the information update part and the check value corresponding to the information update part.

6. The method according to any one of claims 1 to 5, wherein the BLE broadcast further comprises a list of communication key short values, and the device information of the second device that is stored in the first device comprises a communication key between the second device and the first device; and
the method further comprises:
determining, by the first device, a communication key short value corresponding to the communication key between the second device and the first device; and
if the list of communication key short values comprises the communication key short value, sending, by the first device, communication data to the second device by using the communication key between the second device and the first device that is stored in the first device.

7. The method according to any one of claims 1 to 5, wherein the device information of the second device that is stored in the first device comprises a communication key between the second device and the first device; and
the method further comprises:
sending, by the first device, communication data to the second device by using the communication key between the second device and the first device that is stored in the first device.

8. The method according to any one of claims 1 to 7, wherein the BLE broadcast further comprises a short value of account information of the second device and/or a short value of a device identifier of the second device; and
before the determining, by the first device, that the first device stores device information of the second device, the method further comprises:
determining, by the first device based on the short value of the account information of the second device and/or the short value of the device identifier of the second device, whether a trust relationship exists between the second device and the first device; and
when the first device determines that the trust relationship exists between the second device and the first device, determining, by the first device, that the first device stores the device information of the second device.

9. The method according to any one of claims 1 to 8, wherein the method further comprises:
sending, by the first device, a BLE broadcast, wherein the BLE broadcast sent by the first device is used by the second device to restore and update device information of the first device that is stored in the second device.

10. A communication method, wherein the method comprises:
sending, by a second device, a Bluetooth low energy BLE broadcast to a first device, wherein the BLE broadcast comprises a first field, the first field is used to carry a first device information version number of the second device, and the first device information version number indicates a version of current device information of the second device.

11. The method according to claim 10, wherein the method further comprises:
receiving a BLE establishment request from the first device, to establish a BLE connection between the second device and the first device; and
sending, by the second device, device information of the second device to the first device through the BLE connection.

12. The method according to claim 10 or 11, wherein the BLE broadcast further comprises a second field, and the second field is used to carry device update information of the second device.

13. The method according to claim 12, wherein the device update information of the second device comprises an information update part and a check value corresponding to the information update part.

14. The method according to claim 13, wherein the BLE broadcast further comprises a salt value for broadcast encryption, and the device update information of the second device is ciphertext information for encrypting, by using a broadcast key of the second device, the information update part and the check value corresponding to the information update part.

15. The method according to any one of claims 10 to 13, wherein the method further comprises:
receiving, by the second device, communication data from the first device.

16. The method according to any one of claims 10 to 13, wherein the method further comprises:
receiving, by the second device, a BLE broadcast from the first device, and restoring and updating, by the second device by using the BLE broadcast sent by the first device, device information of the first device that is stored in the second device.

17. An electronic device, comprising one or more processors, a memory, and a Bluetooth module, wherein
the memory is configured to store computer program code, the computer program code comprises computer instructions, and when the one or more processors execute the computer instructions, the electronic device is enabled to perform the communication method according to any one of claims 1 to 9, or perform the communication method according to any one of claims 10 to 16.

18. A computer storage medium, comprising computer instructions, wherein when the computer instructions are run on an electronic device, the electronic device is enabled to perform the communication method according to any one of claims 1 to 9, or perform the communication method according to any one of claims 10 to 16.

19. A computer program product, wherein when the computer program product runs on a computer, the computer is enabled to perform the communication method according to any one of claims 1 to 9, or perform the communication method according to any one of claims 10 to 16.
